# EUROPÄISCHE PATENTSCHRIFT

(11) **EP 2 455 235 B1**
(45) Veröffentlichungstag und Bekanntmachung des Hinweises auf die Patenterteilung: **30.04.2014**
(21) Anmeldenummer: 11181741.7
(22) Anmeldetag: 19.09.2011
(51) Int. Cl.: B60C 11/03, B60C 11/13

(54) **Laufstreifenprofil eines Fahrzeugluftreifens**
Run strip profile of a vehicle tyre
Profil de bande de roulement d'un bandage pneumatique de véhicule

(30) Priorität: 17.11.2010 DE 102010060616
(43) Veröffentlichungstag der Anmeldung: 23.05.2012
(73) Patentinhaber: Continental Reifen Deutschland GmbH, 30165 Hannover (DE)
(72) Erfinder: Behr, Ulrich, 30169 Hannover (DE); Rittweger, Stefan, 30163 Hannover (DE)
(74) Vertreter: Finger, Karsten

(56) Entgegenhaltungen:
- EP-A1- 1 580 035
- EP-A1- 2 455 234
- EP-A2- 0 454 657
- DE-A1-102010 016 977
- DE-A1-102010 016 978
- US-A1- 2002 170 644

## Beschreibung

Die Erfindung betrifft ein Laufstreifenprofil eines Fahrzeugluftreifens mit quer verlaufenden Rillen, welche nach radial innen mit einem Rillengrund und beiderseits des Rillengrundes jeweils mit einer Rillenwand begrenzt ist, die jeweils eine Flanke eines durch die Rille in Umfangsrichtung U begrenzten radial erhabenen Profilelementes bildet und mit in radialer Richtung R bis zu der das Profilelement in radialer Richtung R nach außen begrenzenden Oberfläche erstreckt ist, wobei die Rille längs ihrer Erstreckung in axialer Richtung A des Reifens wenigstens mit einem ersten im Wesentlichen geradlinigen Erstreckungsbereich, der sich bis zu einer Knickstelle erstreckt, und ab der Knickstelle mit einem zweiten im Wesentlichen geradlinigen Erstreckungsbereich ausgebildet, so dass die Erstreckungsrichtung des ersten Erstreckungsbereichs und die Erstreckungsrichtung des zweites Erstreckungsbereichs der Rille sowie der Profilelementflanke des ersten Erstreckungsbereichs längs der Rille und des zweiten Erstreckungsbereichs längs der Rille einen über ein erstes der beiden Profilelemente gemessenen Winkel γ mit γ <180° einschließen.

Laufstreifenprofile mit in der Reifenschulter ausgebildeter Profilblockelementreihe, welche aus in Umfangrichtung hintereinander angeordneten und durch Querrillen voneinander beabstandeten Profilblockelementen ausgebildet ist, sind bekannt. Die Querrillen erstrecken sich dabei von einer die Schulterprofilblockrille in axialer Richtung A zur Reifenmitte hin begrenzenden Umfangsrille nach axial außen zunächst über einen ersten Erstreckungsbereich unter Einschluss eines ersten Neigungswinkels zur Umfangsrichtung U bis zu einer Knickstelle und ausgehend von der Knickstelle bis in eine Position außerhalb der Bodenaufstandsfläche über einen zweiten Erstreckungsbereich unter Einschluss eines zweiten Neigungswinkels zur Umfangsrichtung, welcher größer ist als der Neigungswinkel im ersten Erstreckungsbereich. Die Rille und ihre Profilblockelementflanken erstrecken sich längs ihrer Erstreckung in axialer Richtung A des Reifens im ersten bis zur Knickstelle reichenden Erstreckungsbereich geradlinig und im zweiten Erstreckungsbereich ab der Knickstelle ebenfalls geradlinig, so dass die Erstreckungsrichtung des ersten Erstreckungsbereiches und die Erstreckungsrichtung des zweiten Erstreckungsbereichs der Rille sowie die Erstreckungsrichtung der Profilblockelementflanke des ersten Erstreckungsbereiches längs der Rille und des zweiten Erstreckungsbereichs längs der Rille jeweils einen über ein erstes der beiden Profilblockelemente gemessenen Winkel γ von ca. 120°einschließen.

Der abgeknickte Verlauf ist zur Begrenzung der Geräuschabstrahlung des Reifens vorteilhaft. Am Übergang der Profilblockelementflanke des ersten Profilblockelements ist in der Knickstelle eine mit einer Kante ausgebildete spitze Profilblockelementecke und an der in der Rille gegenüberliegenden Flanke des anderen Profilblockelementes ein mehr oder weniger scharfkantiger Übergang zwischen den beiden Flankenabschnitten des ersten Erstreckungsbereiches und des zweiten Erstreckungsbereiches dieser Flanke ausgebildet. Beim Handling kann dies zu unerwünschten Belastungen der an der ersten Flanke ausgebildeten Ecke und an der gegenüberliegenden Flanke und bei manchen Reifen an der gegenüberliegenden Flanken auch zu erhöhten, unerwünschten Kerbwirkungen führen. Die an der ersten Flanke im Bereich der Knickstelle ausgebildete Ecke kann durch die Belastungen leicht beschädigt werden. Im Übergang zwischen erstem und zweitem Flankenerstreckungsabschnitt können sowohl an der ersten als auch an der zweiten Flanke aufgrund der Belastungen Spannungsrisse auftreten. Beim Durchlaufen des Reifenlatsches können sich die aufgrund der Walkbewegung aufeinander zubewegenden Flanken soweit schließen, dass die Aufnahme und Ableitung von Wasser beeinträchtigt und die Griffwirkung auf nasser und auf schnee- bzw. matschbedeckter Straße eingeschränkt wird.

Der Erfindung liegt daher die Aufgabe zugrunde, mit einfachen Mitteln derartige Laufstreifenprofile mit gutem Nassgriff bei gutem Geräuschbild und hoher Haltbarkeit zu ermöglichen.

Die Aufgabe wird erfindungsgemäß durch die Ausbildung eines Laufstreifenprofils eines Fahrzeugluftreifens mit quer verlaufenden Rillen, welche nach radial innen mit einem Rillengrund und beiderseits des Rillengrundes jeweils mit einer Rillenwand begrenzt ist, die jeweils eine Flanke eines durch die Rille in Umfangsrichtung U begrenzten radial erhabenen Profilelementes bildet und mit in radialer Richtung R bis zu der das Profilelement in radialer Richtung R nach außen begrenzenden Oberfläche erstreckt ist, wobei die Rille längs ihrer Erstreckung in axialer Richtung A des Reifens wenigstens mit einem ersten im Wesentlichen geradlinigen Erstreckungsbereich, der sich bis zu einer Knickstelle erstreckt, und ab der Knickstelle mit einem zweiten im Wesentlichen geradlinigen Erstreckungsbereich ausgebildet, so dass die Erstreckungsrichtung des ersten Erstreckungsbereichs und die Erstreckungsrichtung des zweites Erstreckungsbereichs der Rille sowie der Profilelementflanke des ersten Erstreckungsbereichs längs der Rille und des zweiten Erstreckungsbereichs längs der Rille einen über ein erstes der beiden Profilelemente gemessenen Winkel γ mit γ <180°einschließen, gemäß den Merkmalen von Anspruch 1 gelöst, bei dem die zu diesem ersten Profilelement weisende Flanke im Übergang zwischen erstem und zweitem Erstreckungsbereich eine über die gesamte radiale Erstreckung vom Rillengrund bis zu der dieses erste Profilelement nach radial außen begrenzenden Oberfläche mit einer in Richtung zur gegenüberliegenden Flanke in die Rille hinein erstreckten zylindersegmentförmigen Ausbeulung ausgebildet ist, wobei die Zylinderachse der Zylindersegmentform sich im Wesentlichen in radialer Richtung R durch das Profilelement hindurch erstreckt.

Durch diese Ausbildung wird die zur Begrenzung der Geräuschausbreitung gewünschte Ausbildung mit geknickt verlaufenden Querrillen weiter ermöglicht. Dabei können durch die zylindersegmentförmige Ausbildung der zum ersten Profilelement hinweisenden Flanke im über die Knickstelle hinweg reichenden Übergangserstreckungsbereich aufgrund der Abrundung des Zylindersegments über die gesamte radiale Erstreckung hinweg Spannungsrisse im Übergangsbereich sowie eine vorzeitige Abnutzung des Übergangsbereichs des ersten Profilelementes verhindert und gleichzeitig eine sichere Abstützung der gegenüberliegenden Flanke beim Durchlaufen des Reifenlatsches und somit eine Reduzierung der dort auftretenden Kerbwirkungen gewährleistet und das Auftreten von Spannungsrissen verhindert werden. Gleichzeitig bewirkt die Abstützung ein Offenhalten des Rillenquerschnitts im Bereich des ersten und des zweiten Erstreckungsabschnitts der Rille vor und hinter der Knickstelle und somit eine sichere Aufnahme von Wasser, Schnee und Matsch beim Durchlaufen des Reifenlatsches. Die im ersten und im zweiten Erstreckungsbereich ausgebildeten Griffkanten im Übergang zwischen Flanke und radial äußerer Oberfläche des jeweiligen Profilblockelementes können sicher auf nasser und Matsch- oder Schneebedeckter Oberfläche ihre Griffwirkung entfalten. Die durch die Zylindersegmentform in der radial äußeren Oberfläche bewirkte Kreissegmentform bewirkt eine zusätzliche auch zur Übertragung von Querkräften geeignete Griffkante. Die Zylindersegmentform ermöglicht eine zusätzliche Behinderung der Schallausbreitung beim Einlauf in den Reifenlatsch, beim Durchlauf durch den Reifenlatsch und beim Auslauf durch den Reifenlatsch.

Besonders vorteilhaft ist die Ausbildung eines Fahrzeugluftreifens gemäß den Merkmalen von Anspruch 2, wobei die gegenüberliegende Flanke in der Knickstelle im Übergang zwischen ihrem ersten Erstreckungsbereich und ihrem zweiten Erstreckungsbereich mit einer zur zylindersegmentförmigen Ausbeulung der ersten Flanke ausgebildeten zylindersegmentförmigen Abrundung ausgebildet ist, deren Zylinderachse der Zylindersegmentform sich im Wesentlichen in radialer Richtung R durch das erste Profilelement hindurch erstreckt. Auf diese Weise kann die Kerbwirkung zusätzlich minimiert werden.

Besonders vorteilhaft ist die Ausbildung eines Fahrzeugluftreifens gemäß den Merkmalen von Anspruch 3, wobei die Rille in ihrem Erstreckungsverlauf jeweils einen Neigungswinkel δ zur Umfangsrichtung U einschließt, wobei der Neigungswinkels δ im ersten Erstreckungsbereich der Rille kleiner ist als der Neigungswinkel im zweiten Erstreckungsbereich der Rille. Dies ermöglicht eine hinsichtlich der Geräuschentstehung optimale Gestaltung des Footprints (Bodenaufstandsfläche). Hierdurch kann die Geräuschentstehung beim Abrollen des Laufstreifenprofilsbeim Einlauf in den Bereich der Bodenaufstandsfläche minimiert werden.

Besonders vorteilhaft ist die Ausbildung eines Fahrzeugluftreifens gemäß den Merkmalen von Anspruch 4, wobei der Neigungswinkel δ im ersten Erstreckungsbereich mit 35° ≤ δ ≤55°ausgebildet ist. Dies ermöglicht eine hinsichtlich der Geräuschentstehung optimale Gestaltung des Footprints (Bodenaufstandsfläche). Hierdurch kann die Geräuschentstehung beim Abrollen des Laufstreifenprofilsbeim Einlauf in den Bereich der Bodenaufstandsfläche minimiert werden.

Besonders vorteilhaft ist die Ausbildung eines Fahrzeugluftreifens gemäß den Merkmalen von Anspruch 5, wobei die Rille mit ihrem ersten Erstreckungsbereich in eine das Profilelement in axialer Richtung begrenzende Umfangsrille mündet. Die freie Verbindung zur Umfangsrille ist vorteilhaft für gute Aquaplaningeigenschaften bei verbessertem Rollwiderstand durch die vollständige Entkopplung der Profilelemente.

Besonders vorteilhaft ist die Ausbildung eines Fahrzeugluftreifens gemäß den Merkmalen von Anspruch 6, wobei die Rille und die von ihr in Umfangsrichtung begrenzten Profilelemente Teil einer Schulterprofilblockreihe des Laufstreifenprofiles sind. Gerade in dem für die Geräuschbildung wichtigen Schulterabschnitt wird durch die Ausbildung hochwirksam der Geräuschbildung des Reifens entgegengewirkt.

Besonders vorteilhaft ist die Ausbildung eines Fahrzeugluftreifens gemäß den Merkmalen von Anspruch 7, wobei die zum ersten Profilelement weisende Flanke die das erste Profilelement in radialer Richtung begrenzende Oberfläche im ersten Erstreckungsbereich in einer Schnittlinie F₁ und im zweiten Erstreckungsbereich in einer Schnittlinie F₂ schneidet, wobei sich die erste Schnittlinie und die zweite Schnittlinie in ihrer Verlängerung innerhalb des Zylinders der zylindersegmentförmigen Ausbeulung in einem Punkt S schneiden, und wobei die Zylinderachse M auf der von der Rille wegweisenden Seite des aus der Schnittlinie F₁und der Schnittlinie F₂ Schnittpunktes S im Profilelement angeordnet ist. Auf diese Weise kann sichergestellt werden, dass der Zylinder gerade soweit aus dem Profilelement herausragt, dass seine stabilisierende Eigenschaften möglichst gut entfaltet werden.

Besonders vorteilhaft ist die Ausbildung eines Fahrzeugluftreifens gemäß den Merkmalen von Anspruch 8, wobei die zum ersten Profilelement weisende Flanke die das erste Profilelement in radialer Richtung begrenzende Oberfläche im ersten Erstreckungsbereich in einer Schnittlinie F₁ und im zweiten Erstreckungsbereich in einer Schnittlinie F₂ schneidet, wobei sich die erste Schnittlinie und die zweite Schnittlinie in ihrer Verlängerung innerhalb des Zylinders der zylindersegmentförmigen Ausbeulung in einem Punkt S schneiden, wobei die Schnittlinie F₁ und die Schnittlinie F₂ im Schnittpunkt S auf ihrer von der Rille weg und zum ersten Profilelement hinweisenden Seite den Winkel γ einschließen, und wobei die Zylinderachse M auf der Winkelhalbierenden w des Winkels γ im Profilelement angeordnet ist. Auf diese Weise kann sichergestellt werden, dass der Zylinder gerade soweit aus dem Profilelement herausragt, dass seine stabilisierende Eigenschaften möglichst gut entfaltet werden.

Besonders vorteilhaft ist die Ausbildung eines Fahrzeugluftreifens gemäß den Merkmalen von Anspruch 9 mit 110° ≤ γ ≤ 150°. Der Winkel ist groß genug um gute Abriebeigenschaften einfach zu ermöglichen. Die Ausbildung ermöglicht eine hinsichtlich der Geräuschentstehung optimale Gestaltung des Footprints (Bodenaufstandsfläche). Hierdurch kann die Geräuschentstehung beim Abrollen des Laufstreifenprofils beim Einlauf in den Bereich der Bodenaufstandsfläche minimiert werden.

Besonders vorteilhaft ist die Ausbildung eines Fahrzeugluftreifens gemäß den Merkmalen von Anspruch 10, wobei die Zylinderform der zylindersegmentförmigen Ausbeulung mit einem in der das erste Profilelement nach radial außen begrenzenden Oberfläche gemessenen Zylinderdurchmesser D mit 5mm ≤ D ≤ 10mm ausgebildet ist. Der Zylinder ist mit der für seine Funktion hinsichtlich Abstützung, Kerbwirkung und Stabilisierung optimalen Größe ausgebildet.

Besonders vorteilhaft ist die Ausbildung eines Fahrzeugluftreifens gemäß den Merkmalen von Anspruch 11, wobei im ersten und im zweiten Erstreckungsbereich im Anschluss an die zylindersegmentförmige Ausbeulung in der Schnittebene senkrecht zur Erstreckungsrichtung der Rille im jeweiligenErstreckungsbereich die erste Flanke über ihre wesentliche Erstreckung in radialer Richtung R ausgehend vom Rillengrund jeweils mit einem Neigungswinkel α zur radialen Richtung R mit 5° ≤ α ≤15°und die zweite Flanke über ihre wesentliche Erstreckung in radialer Richtung R ausgehend vom Rillengrund jeweils mit einem Neigungswinkel β zur radialen Richtung R mit 5° ≤ β ≤ 15°geneigt ausgebildet ist. Durch die Abstützungseffekte der in dieser Weise geneigten Flanken werden zusätzlich gute Handling- und Trockenbremseigenschaften begünstigt.

Besonders vorteilhaft ist die Ausbildung eines Fahrzeugluftreifens gemäß den Merkmalen von Anspruch 12, wobei im ersten und im zweiten Erstreckungsbereich im Anschluss an die zylindersegmentförmige Ausbeulung in der Schnittebene senkrecht zur Erstreckungsrichtung der Rille im jeweiligen Erstreckungsbereich die erste Flanke über ihre wesentliche Erstreckung in radialer Richtung R ausgehend vom Rillengrund jeweils mit einem Neigungswinkel α zur radialen Richtung R und die zweite Flanke über ihre wesentliche Erstreckung in radialer Richtung R ausgehend vom Rillengrund jeweils mit einem Neigungswinkel β zur radialen Richtung R mit α > β ausgebildet ist. Durch die Abstützungseffekte der in dieser Weise geneigten Flanken werden zusätzlich gute Handling- und Trockenbremseigenschaften begünstigt.

Besonders vorteilhaft ist die Ausbildung eines Fahrzeugluftreifens gemäß den Merkmalen von Anspruch 13, wobei die erste Flanke in ihrem Übergang zu der das erste Profilelement nach radial außen hin begrenzenden Oberfläche längs ihrer Erstreckung außerhalb der zylindersegmentförmigen Ausbeulung im ersten und/oder im zweiten Erstreckungsbereich mit einer Fase ausgebildet ist. Hierdurch können zusätzlich Einrolleffekte im Übergang zwischen Flanke und radial äußerer Oberfläche beim Durchlaufen des Reifenlatsches vermieden und Trockenbremseigenschaften verbessert werden.

Die Erfindung wird im Folgenden an Hand der in den Figuren 1 bis 9 dargestellten Ausführungsbeispiele näher erläutert. Hierin zeigen
- Fig. 1: eine Draufsicht auf einen Abschnitt eines Laufstreifenprofiles eines PKW-Fahrzeugluftreifens,
- Fig.2: vergrößerter Ausschnittes einer Profilblockreihe von Fig. 1 in Draufsicht,
- Fig. 3: das Laufstreifenprofil von Fig.1 in Schnittdarstellung gemäß Schnitt III-IIIvon Fig.2,
- Fig.4: das Laufstreifenprofil von Fig.1 in Schnittdarstellung gemäß Schnitt IV-IV von Fig.2,
- Fig.5: das Laufstreifenprofil von Fig.1 in Schnittdarstellung gemäß Schnitt V-V von Fig.2,
- Fig.6: eine Draufsicht auf einen Abschnitt eines Laufstreifenprofiles eines PKW-Fahrzeugluftreifens in alternativer Ausbildung,
- Fig.7: vergrößerter Ausschnittes einer Profilblockreihe von Fig. 6 in Draufsicht,
- Fig.8: das Laufstreifenprofil von Fig.6 in Schnittdarstellung gemäß Schnitt VIII-VIII von Fig.7,
- Fig.9: das Laufstreifenprofil von Fig.6 in Schnittdarstellung gemäß Schnitt VIII-VIII von Fig.7 in alternativer Ausbildung.

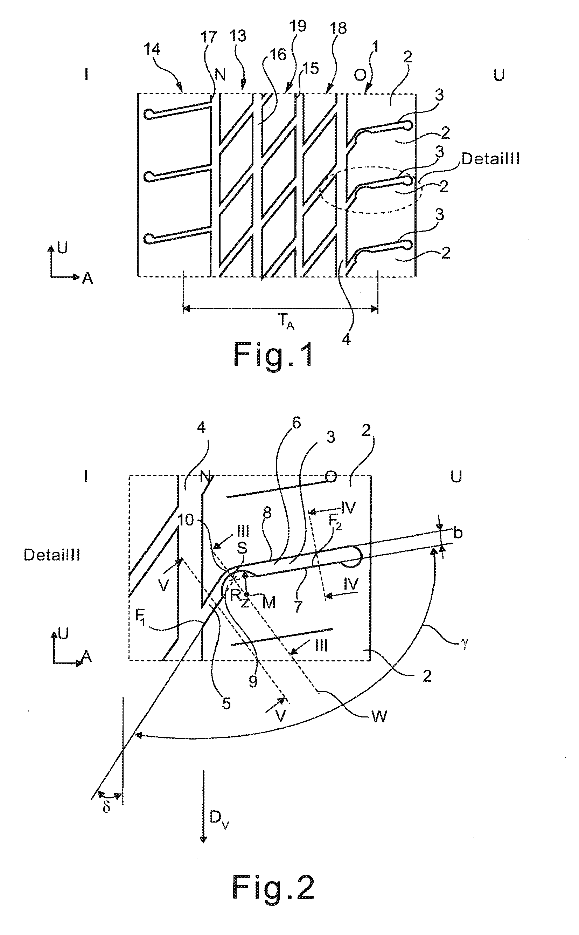

Die Figuren 1 bis 5 zeigen ein Laufstreifenprofil eines Fahrzeugluftreifens für Pkw-Fahrzeuge mit in axialer Richtung A des Fahrzeugluftreifens nebeneinander angeordneten, jeweils in Umfangsrichtung U des Fahrzeugluftreifens ausgerichteten und über den Umfang erstreckten Profilblockreihen 14, 13, 19, 18 und 1. Die Profilblockreihe 1 ist die für den Einsatz in einem Fahrzeug als die zur Fahrzeugaußenseite OU weisend ausgebildete Schulterprofilblockreihe. Die Profilblockreihe 14 ist die für den Einsatz im Fahrzeug als die zur Fahrzeuginnenseite IN weisend ausgebildete Schulterprofilblockreihe. Die Profilblockreihen 13, 19 und 18 sind in axialer Richtung A zwischen den beiden Profilblockreihen 1 und 14 ausgebildet. Die Profilblockreihe 1 ist in Umfangsrichtung U des Fahrzeugluftreifens aus einer Vielzahl von in Umfangsrichtung U hintereinander angeordneten und jeweils durch eine Querrille 3 in Umfangsrichtung U voneinander beabstandeten Profilblockelementen 2 bekannter Art ausgebildet. Die Profilblockreihe 14 ist aus einer Vielzahl von in Umfangrichtung U hintereinander angeordneten und jeweils durch Querrillen voneinander beabstandeten Profilblockelementen bekannter Art ausgebildet. Die Profilblockreihe 13 ist aus einer Vielzahl von in Umfangsrichtung U hintereinander angeordneten und jeweils durch Quer-oder Schrägrillen voneinander beabstandeten Profilblockelementen bekannter Art ausgebildet. Die Profilblockreihe 19 ist aus einer Vielzahl von in Umfangsrichtung U hintereinander angeordneten und jeweils durch Quer- oder Schrägrillen voneinander beabstandeten Profilblockelementen bekannter Art ausgebildet. Die Profilblockreihe 18 ist aus einer Vielzahl von in Umfangsrichtung U hintereinander angeordneten und jeweils durch Quer- oder Schrägrillen voneinander beabstandeten Profilblockelementen bekannter Art ausgebildet.

Die Profilblockreihe 14 und die Profilblockreihe 13 sind in axialer Richtung A durch eine in Umfangsrichtung U ausgerichtete und über den gesamten Umfang des Fahrzeugluftreifens erstreckte Umfangsrille 17 voneinander beabstandet. Die Profilblockreihe 13 und die Profilblockreihe 19 sind in axialer Richtung A durch eine in Umfangsrichtung U ausgerichtete und über den gesamten Umfang des Fahrzeugluftreifens erstreckte Umfangsrille 16 voneinander beabstandet. Die Profilblockreihe 19 und die Profilblockreihe 18 sind in axialer Richtung A durch eine in Umfangsrichtung U ausgerichtete und über den gesamten Umfang erstreckte Umfangsrille 15 voneinander beabstandet. Die Profilblockreihe 18 und die Profilblockreihe 1 sind in axialer Richtung A durch eine in Umfangsrichtung U ausgerichtete und über den gesamten Umfang des Fahrzeugluftreifens erstreckte Umfangsrille 4 voneinander beabstandet.

Die Querrillen der Profilblockreihe 14 erstrecken sich ausgehend von der Umfangsrille 17 in axialer Richtung A nach außen bis in einer Position außerhalb der Bodenaufstandsbreite T_{A}.Die Querrillen 3 der Profilblockreihe 1 erstrecken sich in axialer Richtung A ausgehend von der Umfangsrille 4 nach außen in die Profilblockreihe 1 bis in eine Position außerhalb der Bodenaufstandsbreite T_{A}.

Die Umfangsrillen 17, 16, 15 und 4 sowie die Querrillen der Profilblockreihen 14, 13und 19 und 18 sind in radialer Richtung R nach innen jeweils durch einen Rillengrund begrenzt und beiderseits des Rillengrundes jeweils durch eine sich ausgehend vom Rillengrund in radialer Richtung R des Fahrzeugluftreifens nach außen erstreckende Rillenwand, welche jeweils die zur jeweiligen Rille weisende Flanke des angrenzenden Profilblockelementes bildet, begrenzt.

Die Querrillen 3 sind längs ihrer Erstreckung von der Umfangsrille 4 nach axial außen - wie in den Figuren 2 bis 5 dargestellt ist - in radialer Richtung R nach innen durch einen Rillengrund 12 begrenzt. Die Profilblockelemente 2 sind in radialer Richtung R nach außen hin durch eine die Straßenkontaktoberfläche bildende radial äußere Oberfläche 11 begrenzt. In der in Fig. 2 mit Pfeil dargestellten Drehrichtung Dᵥ bei Vorwärtsfahrt des Fahrzeugluftreifens im montierten Zustand am Fahrzeug ist die jeweilige Querrille 3 dem Rillengrund 12 vorgeordnet mit einer Rillenwand, welche die Flanke 7 des in Drehrichtung Dᵥ bei Vorwärtsfahrt der Querrille 3 vorgeordneten Profilblockelementes 2 bildet, begrenzt. Die Querrille 3 ist in Drehrichtung Dᵥ bei Vorwärtsfahrt dem Rillengrund 12 der jeweiligen Querrille 3 nachgeordnet durch eine Rillenwand, welche die Flanke 8 des bei Drehrichtung Dᵥ bei Vorwärtsfahrt der Querrille 3 nachgeordneten Profilblockelementes 2 bildet, begrenzt. Die Flanke 7 erstreckt sich über gesamte axiale Erstreckung der Querrille 3 ausgehend vom Rillengrund 12 nach radial außen bis zu der das zugehörige Profilblockelement 2 nach radial außen begrenzenden radial äußeren Oberfläche 11. Die Flanke 8 erstreckt sich über die gesamte axiale Erstreckung der Querrille 3 ausgehend vom Rillengrund 12 der Querrille 3 nach radial außen bis zu der das zugehörige Profilblockelement 2 nach radial außen begrenzenden radial äußeren Oberfläche 11.

Ausgehend von der Umfangsrille 4 erstreckt sich die Querrille 3 in axialer Richtung A nach außen in Richtung zu der die Fahrzeugaußenseite OU bildenden Reifenschulter hin mit ihren beiden Flanken 7 und 8 in einem ersten axialen Erstreckungsbereich 5 geradlinig unter Einschluss eines Neigungswinkels δ zur Umfangsrichtung mit 35° ≤ δ ≤ 55°bis zu einem eine Knickstelle bildenden Übergangsbereich. Der Neigungswinkels δ ist im ersten Erstreckungsbereich 5 beispielsweise mit δ = 40°ausgebildet. Im Bereich des die Knickstelle bildenden Übergangsbereichs knickt die Umfangsrille 3 in ihrem Erstreckungsverlauf ab und erstreckt sich mit ihren Flanken 7 und 8 ab dem die Knickstelle bildenden Übergangsbereich in einem zweiten axialen Erstreckungsbereich 6 bis in eine Position außerhalb der Bodenaufstandsbreite T_{A} geradlinig unter Einschluss eines Neigungswinkels δ zur Umfangsrichtung U, wobei der Neigungswinkel δ in dem zweiten axialen Erstreckungsbereich 6 größer gewählt ist als der Neigungswinkel δ im ersten axialen Erstreckungsbereich 5. Beispielsweise ist δ im zweiten axialen Erstreckungsbereich 6 mit δ = 80°ausgebildet. Im dargestellten Ausführungsbeispiel ist ausgehend von der Umfangsrille 4 nach axial außen hin die Orientierung der Querrille 3 sowohl im ersten axialen Erstreckungsbereich 5 als auch im zweiten axialen Erstreckungsbereich 6 jeweils mit gleicher Umfangsorientierung entgegen der Drehrichtung Dᵥ bei Vorwärtsfahrt gewählt.

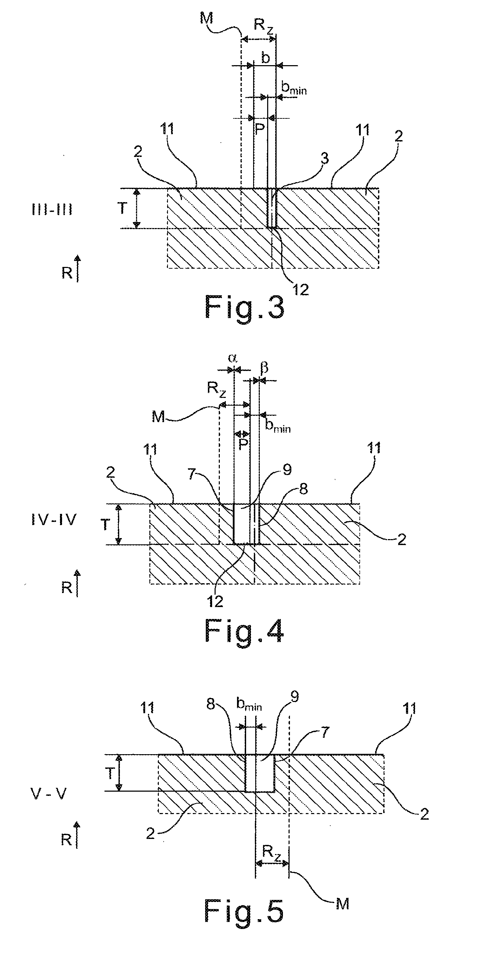

Die Flanke 7 ist im ersten axialen Erstreckungsbereich 5 und im zweiten axialen Erstreckungsbereich 6 in den Schnittebenen senkrecht zur Längserstreckungsrichtung der Querrille 3 jeweils ausgehend vom Rillengrund 12 nach radial außen bis zur radialen äußeren Oberfläche 11 unter Einschluss eines Winkels α zur Radialen R geneigt verlaufend ausgebildet. Die Flanke 8 ist im ersten axialen Erstreckungsbereich 5 und im zweiten axialen Erstreckungsbereich 6 jeweils in den Schnittebenen senkrecht zur Längserstreckungsrichtung der Querrille 3 ausgehend vom Rillengrund 12 nach radial außen bis zur radialen äußeren Oberfläche 11 unter Einschluss eines Winkels β zur Radialen R geneigt verlaufend ausgebildet. Im in den Figuren 3 und 5 dargestellten Ausführungsbeispiel ist α = 0°und β = 0°gewählt.

Wie in den Figuren 2,3,4 und 5 zu erkennen ist, ist die Flanke 7 im Übergang zwischen dem ersten Erstreckungsbereich 5 und dem zweiten Erstreckungsbereich 6 mit einer zylindersegmentförmigen Ausbeulung 9, welche sich ausgehend vom Rillengrund 12 bis zur radial äußeren Oberfläche 11 des Profilblockelements 2 erstreckt, ausgebildet. Die Zylinderachse M des die zylindersegmentförmigen Ausbeulung 9 bildenden Zylinders ist in radialer Richtung R des Fahrzeugluftreifens ausgerichtet und erstreckt sich durch das von der Flanke 7 begrenzte Profilblockelement 2 hindurch.

Wie in Fig. 2 dargestellt ist, schneidet die Profilblockelementflanke 7 im ersten axialen Erstreckungsbereich 5 die radial äußere das Profilblockelement 2 begrenzende Oberfläche in einer Schnittkante F₁ und in dem zweiten axialen Erstreckungsbereich in einer Schnittkante F₂.In ihrer in axialer Richtung A aufeinander zu gerichteten Verlängerung schneiden sich die Schnittkanten F₁ und F₂ in einem im Zylinder der zylindersegmentförmigen Ausbeulung 9 ausgebildeten Schnittpunkt S.

Die Erstreckungsrichtung der Querrille 3 im ersten Erstreckungsabschnitt 5 und die Erstreckungsrichtung der Querrille 3 im zweiten Erstreckungsabschnitt 6 sowie die Schnittlinie F₁ und die Schnittlinie F₂ schließen über das von der Profilblockelementflanke 7 begrenzte Profilblockelement 2 hinweg streichend einen Winkel γ ein mit 110° ≤γ ≤ 155°.Im dargestellten Ausführungsbeispiel ist γ= 135° gewählt.

Die Zylinderachse M ist in dem zwischen den beiden Schenkeln F₁ und F₂ des um den Schnittpunkt S über das Profilblockelement 2 aufgespannten Erstreckungsabschnitt des Profilblockelementes 2 ausgebildet und schneidet im dargestellten Ausführungsbeispiel die Winkelhalbierenden w des zwischen den beiden im Schnittpunkt S die Schenkel des Winkels γ bildenden Schnittkanten F₁ und F₂.

Der Zylinder der zylindersegementförmigen Ausbeulung 9 ist mit einem in der radial äußeren Oberfläche 11 gemessenen Zylinderdurchmesser D mit 5mm ≤ D ≤ 10mm ausgebildet. In der Figur 3 ist zur Vereinfachung der Zylinderradius R_{z} mit R_{z} =(D/2) eingetragen.

Die Flanke 8 ist im Übergangsbereich zwischen ersten Erstreckungsabschnitt 5 und zweitem Erstreckungsabschnitt 6 der Querrille 3 im Bereich der Knickstelle mit einer korrespondierend zur zylindersegementförmigen Ausbeulung 9 der Flanke 7 ausgebildeten zylindersegmentförmigen Abrundung 10 ausgebildet, wobei die Zylinderform der zylindersegmentförmigen Abrundung 10 koaxial zur Zylinderform der zylindersegementförmigen Ausbeulung 9 ausgebildet ist.

Die Querrille 3 ist in dem ersten Erstreckungsbereich 5 und in dem zweiten Erstreckungsbereich 6 durch die radial äußere Oberfläche 11 der beiden angrenzenden Profilblockelemente 2 mit einer jeweils senkrecht zur Erstreckungsrichtung der Querrille 3 gemessenen Rillenbreite b ausgebildet. Die zylindersegmentförmige Ausbeulung 9 der Flanke 7 und die zylindersegmentförmige Abrundung 10 der Flanke 8 sind in ihren Durchmessern derart bemessen, dass über die gesamte radiale Erstreckung der Querrille 3 die Querrille zwischen Ausbeulung 9 und Abrundung 10 mit einer Mindestbreite bₘᵢₙ ausgebildet ist. Die Mindestbreite bₘᵢₙ dieses zwischen Ausbeulung 9 und Abrundung 10 auf diese Weise durch die Querrill3 3 gebildeten offenen Spaltes ist im Bereich der Knickstelle mit bₘᵢₙ ≥0,8 mm ausgebildet. Die Breite b der Querrille 3 ist im ersten Erstreckungsbereich 5 und im zweiten Erstreckungsbereich 6 mit 1,8 mm ≤b ≤ 5mm - beispielsweise mit b = 3mm - gemessen in der durch die radial äußeren Oberflächen 11 der angrenzenden Profilblockelemente 2 gebildeten Mantelfläche ausgebildet.

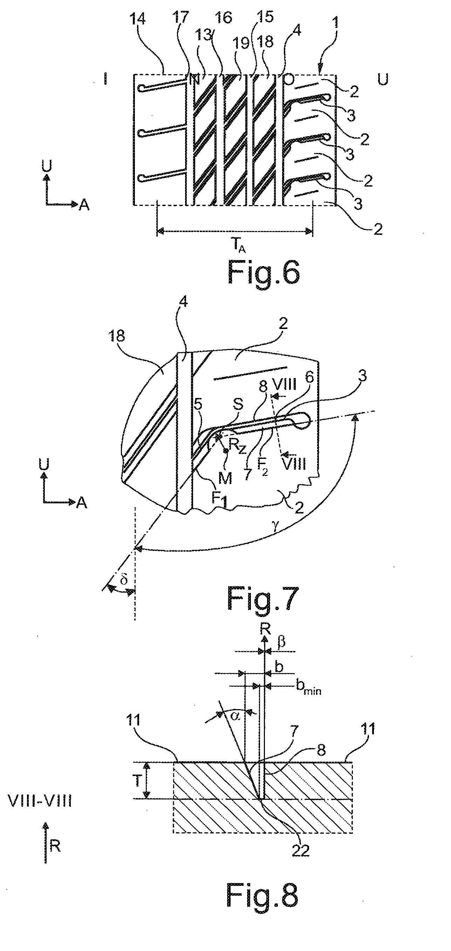

Die Figuren 6 bis 8 zeigen ein Ausführungsbeispiel, bei dem die Flanke 7 im ersten axialen Erstreckungsbereich 5 und im zweiten axialen Erstreckungsbereich 6 jeweils mit einem Neigungswinkel α zur radialen Richtung R mit 5° ≤α ≤ 15°ausgebildet ist. Im dargestellten Ausführungsbeispiel ist α = 10°gewählt.

Die Fig. 7 und 8 zeigen am Beispiel des zweiten Erstreckungsbereiches 6 dabei ein erstes Ausführungsbeispiel, bei dem der Flankenwinkel β der Flanke 8 in beiden Erstreckungsbereichen 5 und 6 jeweils mit β = 0°ausgebildet ist.

In Fig. 7 ist im axialen Erstreckungsbereich 5 eine weiteres Ausführungsbeispiel dargestellt, bei dem der Flankenwinkel β der Flanke 8 im axial ersten Erstreckungsabschnitt 5 der Querrille 3 ebenfalls mit einem Neigungswinkel mit 5° ≤ β ≤ 15°,beispielsweise mit β = 10°ausgebildet ist. Der Flankenwinkel β im zweiten axialen Erstreckungsabschnitt 6 ist mit β= 0° ausgebildet.

In einem weiteren, nicht dargestellten Ausführungsbeispiel ist der Flankenwinkel β der Flanke 8 sowohl im ersten als auch im zweiten axialen Erstreckungsabschnitt 6 mit 5° ≤ β ≤ 15°,beispielsweise mit β = 10°ausgebildet.

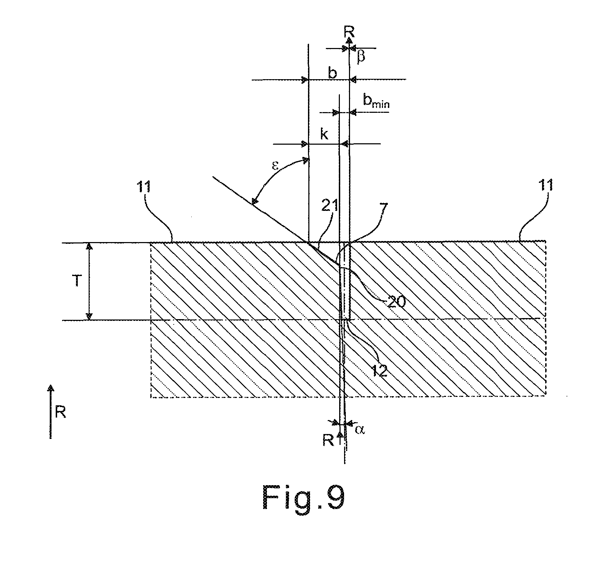

Fig. 9 zeigt ein weiteres Ausführungsbeispiel, bei dem die Flanke 7 im ersten axialen Erstreckungsabschnitt 5 und/oder im zweiten Erstreckungsabschnitt 6 in ihrem wesentlichen radial inneren Erstreckungsabschnitt 20 mit einem Flankenwinkel α und in einem radial äußeren kurzen Erstreckungsabschnitt 21 als Phase mit einem Flankenwinkel ε mit 35° ≤ ε ≤ 55°zur Radialen R geneigt ausgebildet ist. Der Flankenwinkel α ist - wie in den vorangegangenen Beispielen - entweder in einer Ausführung mit α = 0° oder mit α > 0° ausgebildet. Der Flankenwinkel α ist in einer Ausführung mit 5° ≤ α ≤15°, beispielsweise mit α = 10°ausgebildet.

Im dargestellten Ausführungsbeispiel von Fig. 9 ist ε = 45°gewählt. Der radial äußere als Phase ausgebildete Erstreckungsabschnitt 21 der Flanke 7 ist mit einer senkrecht zur Erstreckungsrichtung der Querrille 3 gemessenen Breite k = 2mm ausgebildet.

### Bezugszeichenliste

### (Teil der Beschreibung)

- 1: Profilblockreihe
- 2: Profilblockelement
- 3: Rille
- 4: Umfangsrille
- 5: Erster Erstreckungsbereich
- 6: Zweiter Erstreckungsbereich
- 7: Flanke
- 8: Flanke
- 9: Zylindersegmentförmige Ausbeulung
- 10: Zylindersegmentförmige Abrundung
- 11: Radial äußere Oberfläche
- 12: Rillengrund
- 13: Profilblockreihe
- 14: Profilblockreihe
- 15: Umfangsrille
- 16: Umfangsrille
- 17: Umfangsrille
- 18: Profilblockreihe
- 19: Profilblockreihe
- 20: Radial innerer Erstreckungsbereich
- 21: Fase

## Patentansprüche

1. Laufstreifenprofil eines Fahrzeugluftreifens mit quer verlaufenden Rillen (3), welche nach radial innen mit einem Rillengrund (12) und beiderseits des Rillengrundes (12) jeweils mit einer Rillenwand begrenzt ist, die jeweils eine Flanke (7,8) eines durch die Rille (3) in Umfangsrichtung U begrenzten radial erhabenen Profilelementes (2) bildet und mit in radialer Richtung R bis zu der das Profilelement (2) in radialer Richtung R nach außen begrenzenden Oberfläche (11) erstreckt ist, wobei die Rille (3) längs ihrer Erstreckung in axialer Richtung A des Reifens wenigstens mit einem ersten im Wesentlichen geradlinigen Erstreckungsbereich (5), der sich bis zu einer Knickstelle erstreckt, und ab der Knickstelle mit einem zweiten im Wesentlichen geradlinigen Erstreckungsbereich (6) ausgebildet, so dass die Erstreckungsrichtung des ersten Erstreckungsbereichs (6) und die Erstreckungsrichtung des zweites Erstreckungsbereichs der Rille (3) sowie der Profilelementflanke (7) des ersten Erstreckungsbereichs (5) längs der Rille (3) und des zweiten Erstreckungsbereichs (6) längs der Rille (3) einen über ein erstes (2) der beiden Profilelemente gemessenen Winkel γ mit γ < 180° einschließen,
**dadurch gekennzeichnet,**
**dass** die zu diesem ersten Profilelement (2) weisende Flanke (7) im Übergang zwischen erstem (5) und zweitem (6) Erstreckungsbereich eine über die gesamte radiale Erstreckung vom Rillengrund (12) bis zu der dieses erste Profilelement(2) nach radial außen begrenzenden Oberfläche (11) mit einer in Richtung zur gegenüberliegenden Flanke (8) in die Rille (3) hinein erstreckten zylindersegmentförmigen Ausbeulung (9) ausgebildet ist, wobei die Zylinderachse M der Zylindersegmentform sich im Wesentlichen in radialer Richtung R durch das Profilelement (2) hindurch erstreckt.

2. Laufstreifenprofil gemäß den Merkmalen von Anspruch 1,
wobei die gegenüberliegende Flanke (8) in der Knickstelle im Übergang zwischen ihrem ersten Erstreckungsbereich (5) und ihrem zweiten Erstreckungsbereich (6) mit einer zur zylindersegmentförmigen Ausbeulung (9) der ersten Flanke (7) ausgebildeten zylindersegmentförmigen Abrundung (10) ausgebildet ist, deren Zylinderachse M der Zylindersegmentform sich im Wesentlichen in radialer Richtung R durch das erste Profilelement (2) hindurch erstreckt.

3. Laufstreifenprofil gemäß den Merkmalen von Anspruch 1 oder 2,
wobei die Rille (3) in ihrem Erstreckungsverlauf jeweils einen Neigungswinkel δ zur Umfangsrichtung U einschließt, wobei der Neigungswinkels δ im ersten Erstreckungsbereich (5) der Rille (3) kleiner ist als der Neigungswinkel im zweiten Erstreckungsbereich (6) der Rille (3).

4. Laufstreifenprofil gemäß den Merkmalen von Anspruch 3
wobei der Neigungswinkel δ im ersten Erstreckungsbereich (5) mit 35° ≤ δ ≤ 55° ausgebildet ist.

5. Laufstreifenprofil gemäß den Merkmalen von einem oder mehreren der vorangegangenen Ansprüche,
wobei die Rille (3) mit ihrem ersten Erstreckungsbereich (5) in eine das Profilelement (2) in axialer Richtung A begrenzende Umfangsrille (4) mündet.

6. Laufstreifenprofil gemäß den Merkmalen von Anspruch 5,
wobei die Rille (3) und die von ihr in Umfangsrichtung U begrenzten Profilelemente (2) Teil einer Schulterprofilblockreihe (1) des Laufstreifenprofiles sind.

7. Laufstreifenprofil gemäß den Merkmalen von einem oder mehreren der vorangegangenen Ansprüche,
wobei die zum ersten Profilelement (2) weisende Flanke (7) die das erste Profilelement (2) in radialer Richtung R begrenzende Oberfläche (11) im ersten Erstreckungsbereich (5) in einer Schnittlinie F₁ und im zweiten Erstreckungsbereich (6) in einer Schnittlinie F₂ schneidet,
wobei sich die erste Schnittlinie F₁ und die zweite Schnittlinie F₂ in ihrer Verlängerung innerhalb des Zylinders der zylindersegmentförmigen Ausbeulung (9) in einem Punkt S schneiden, und
wobei die Zylinderachse M auf der von der Rille (3) wegweisenden Seite des aus der Schnittlinie F₁ und der Schnittlinie F₂ Schnittpunktes S im Profilelement (2) angeordnet ist.

8. Laufstreifenprofil gemäß den Merkmalen von einem oder mehreren der vorangegangenen Ansprüche,
wobei die zum ersten Profilelement (2) weisende Flanke (7) die das erste Profilelement (2) in radialer Richtung R begrenzende Oberfläche im ersten Erstreckungsbereich (5) in einer Schnittlinie F₁ und im zweiten Erstreckungsbereich (6) in einer Schnittlinie F₂ schneidet,
wobei sich die erste Schnittlinie F₁ und die zweite Schnittlinie F₂ in ihrer Verlängerung innerhalb des Zylinders der zylindersegmentförmigen Ausbeulung (9) in einem Punkt S schneiden,
wobei die Schnittlinie F₁ und die Schnittlinie F₂ im Schnittpunkt S auf ihrer von der Rille (3) weg und zum ersten Profilelement (2) hinweisenden Seite den Winkel γ einschließen, und
wobei die Zylinderachse M auf der Winkelhalbierenden w des Winkels γ im Profilelement (2) angeordnet ist.

9. Laufstreifenprofil gemäß den Merkmalen von einem oder mehreren der vorangegangenen Ansprüche,
mit 110° ≤ γ ≤ 150°.

10. Laufstreifenprofil gemäß den Merkmalen von einem oder mehreren der vorangegangenen Ansprüche,
wobei die Zylinderform der zylindersegmentförmigen Ausbeulung (9) mit einem in der das erste Profilelement (2) nach radial außen begrenzenden Oberfläche (11) gemessenen Zylinderdurchmesser D mit 5mm ≤ D ≤ 10mm ausgebildet ist.

11. Laufstreifenprofil gemäß den Merkmalen von einem oder mehreren der vorangegangenen Ansprüche,
wobei im ersten (5) und im zweiten (6) Erstreckungsbereich im Anschluss an die zylindersegmentförmige Ausbeulung (9) in der Schnittebene senkrecht zur Erstreckungsrichtung der Rille (3) im jeweiligen Erstreckungsbereich die erste Flanke (7) über ihre wesentliche Erstreckung in radialer Richtung R ausgehend vom Rillengrund (12) jeweils mit einem Neigungswinkel α zur radialen Richtung R mit 5° ≤ α ≤ 15° und die zweite Flanke (8) über ihre wesentliche Erstreckung in radialer Richtung R ausgehend vom Rillengrund (12) jeweils mit einem Neigungswinkel β zur radialen Richtung R mit 5° ≤ β ≤ 15° geneigt ausgebildet ist.

12. Laufstreifenprofil gemäß den Merkmalen von einem oder mehreren der vorangegangenen Ansprüche,
wobei im ersten (5) und im zweiten (6) Erstreckungsbereich im Anschluss an die zylindersegmentförmige Ausbeulung (9) in der Schnittebene senkrecht zur Erstreckungsrichtung der Rille (3) im jeweiligen Erstreckungsbereich die erste Flanke (7) über ihre wesentliche Erstreckung in radialer Richtung R ausgehend vom Rillengrund (12) jeweils mit einem Neigungswinkel α zur radialen Richtung R und die zweite Flanke (8) über ihre wesentliche Erstreckung in radialer Richtung R ausgehend vom Rillengrund (12) jeweils mit einem Neigungswinkel β zur radialen Richtung R mit α > β ausgebildet ist.

13. Laufstreifenprofil gemäß den Merkmalen von einem oder mehreren der vorangegangenen Ansprüche,
wobei die erste Flanke (7) in ihrem Übergang zu der das erste Profilelement (2) nach radial außen hin begrenzenden Oberfläche (11) längs ihrer Erstreckung außerhalb der zylindersegmentförmigen Ausbeulung (9) im ersten (6) und/oder im zweiten (7) Erstreckungsbereich mit einer Fase (21) ausgebildet ist.

## Claims

1. Tread strip profile of a pneumatic vehicle tyre, comprising transversely running grooves (3), which are delimited radially inwardly by a groove base (12) and respectively on both sides of the groove base (12) by a groove wall, which in each case forms a flank (7, 8) of a radially raised profile element (2), which is delimited in the circumferential direction U by the groove (3) and is made to extend in the radial direction R up to the surface (11) delimiting the profile element (2) outwardly in the radial direction R, wherein the groove (3) is formed along its extent in the axial direction A of the tyre at least with a first substantially straight region of extent (5), which extends up to a point of inflection, and as from the point of inflection with a second substantially straight region of extent (6), so that the direction of extent of the first region of extent (5) and the direction of extent of the second region of extent of the groove (3) and also of the profile element flank (7) of the first region of extent (5) along the groove (3) and of the second region of extent (6) along the groove (3) enclose an angle γ, measured over a first (2) of the two profile elements, with γ < 180°,
**characterized**
**in that** the flank (7) facing this first profile element (2) is formed at the transition between the first (5) and the second (6) region of extent over the entire radial extent from the groove base (12) to the surface (11) delimiting this first profile element (2) radially outwardly with a cylinder-segment-shaped bulge (9) that is made to extend into the groove (3), in the direction of the opposite flank (8), the cylinder axis M of the cylinder segment shape extending substantially in the radial direction R through the profile element (2)

2. Tread strip profile according to the features of Claim 1, wherein the opposite flank (8) is formed at the point of inflection at the transition between its first region of extent (5) and its second region of extent (6) with a cylinder-segment-shaped rounding (10), which is formed in relation to the cylinder-segment-shaped bulge (9) of the first flank (7) and of which the cylinder axis M of the cylinder segment shape extends substantially in the radial direction R through the first profile element (2).

3. Tread strip profile according to the features of Claim 1 or 2,
wherein the groove (3) respectively encloses in the course of its extent an angle of inclination δ in relation to the circumferential direction U, the angle of inclination δ in the first region of extent (5) of the groove (3) being less than the angle of inclination in the second region of extent (6) of the groove (3).

4. Tread strip profile according to the features of Claim 3,
wherein the angle of inclination δ in the first region of extent (5) is formed with 35° ≤ δ ≤ 55°.

5. Tread strip profile according to the features of one or more of the preceding claims,
wherein the groove (3) opens out with its first region of extent (5) into a circumferential groove (4) delimiting the profile element (2) in the axial direction A.

6. Tread strip profile according to the features of Claim 5,
wherein the groove (3) and the profile elements (2) delimited by it in the circumferential direction U are part of a row of shoulder profile blocks (1) of the tread strip profile.

7. Tread strip profile according to the features of one or more of the preceding claims,
wherein the flank (7) facing the first profile element (2) intersects the surface (11) delimiting the first profile element (2) in the radial direction R in the first region of extent (5) in a sectional line F₁ and in the second region of extent (6) in a sectional line F₂,
wherein the first sectional line F₁ and the second sectional line F₂ intersect in their extension within the cylinder of the cylinder-segment-shaped bulge (9) at a point S, and
wherein the cylinder axis M is arranged in the profile element (2) on the side facing away from the groove (3) of the point of intersection S formed by the sectional line F₁ and the sectional line F₂.

8. Tread strip profile according to the features of one or more of the preceding claims,
wherein the flank (7) facing the first profile element (2) intersects the surface delimiting the first profile element (2) in the radial direction R in the first region of extent (5) in a sectional line F₁ and in the second region of extent (6) in a sectional line F₂,
wherein the first sectional line F₁ and the second sectional line F₂ intersect in their extension within the cylinder of the cylinder-segment-shaped bulge (9) at a point S,
wherein the sectional line F₁ and the sectional line F₂ enclose at the point of intersection S on their side facing away from the groove (3) and facing towards the first profile element (2) the angle γ, and
wherein the cylinder axis M is arranged on the angle bisector w of the angle γ in the profile element (2).

9. Tread strip profile according to the features of one or more of the preceding claims,
with 110° ≤ γ ≤ 150°.

10. Tread strip profile according to the features of one or more of the preceding claims,
wherein the cylinder shape of the cylinder-segment-shaped bulge (9) is formed with a cylinder diameter D, measured in the surface (11) delimiting the first profile element (2) radially outwardly, with 5 mm ≤ D ≤ 10 mm.

11. Tread strip profile according to the features of one or more of the preceding claims,
wherein, in the first (5) and in the second (6) region of extent, following on from the cylinder-segment-shaped bulge (9), in the sectional plane perpendicular to the direction of extent of the groove (3), in the respective region of extent the first flank (7) is formed so as to be inclined over its main extent in the radial direction R starting from the groove base (12) respectively with an angle of inclination α in relation to the radial direction R with 5° < α ≤ 15°, and the second flank (8) is formed so as to be inclined over its main extent in the radial direction R starting from the groove base (12) respectively with an angle of inclination β in relation to the radial direction R with 5° ≤ β ≤ 15°.

12. Tread strip profile according to the features of one or more of the preceding claims,
wherein, in the first (5) and in the second (6) region of extent, following on from the cylinder-segment-shaped bulge (9), in the sectional plane perpendicular to the direction of extent of the groove (3), in the respective region of extent the first flank (7) is formed over its main extent in the radial direction R starting from the groove base (12) respectively with an angle of inclination α in relation to the radial direction R, and the second flank (8) is formed over its main extent in the radial direction R starting from the groove base (12) respectively with an angle of inclination β in relation to the radial direction R with α > β.

13. Tread strip profile according to the features of one or more of the preceding claims,
wherein the first flank (7) is formed at its transition to the surface (11) delimiting the first profile element (2) radially outwardly along its extent outside the cylinder-segment-shaped bulge (9) in the first (5) and/or in the second (6) region of extent with a bevel (21).

## Revendications

1. Profil de bande de roulement d'un bandage pneumatique de véhicule avec des gorges s'étendant transversalement (3), lesquelles sont limitées radialement vers l'intérieur par une base de gorge (12) et de chaque côté de la base de gorge (12) à chaque fois par une paroi de gorge qui forme à chaque fois un flanc (7, 8) d'un élément profilé (2) rehaussé radialement dans la direction périphérique U par la gorge (3), et qui s'étend dans la direction radiale R jusqu'à la surface (11) limitant l'élément profilé (2) vers l'extérieur dans la direction radiale R, la gorge (3) étant réalisée le long de son étendue dans la direction axiale A du bandage au moins avec une première région d'étendue essentiellement rectiligne (5) qui s'étend jusqu'à un point d'inflexion et à partir du point d'inflexion avec une deuxième région d'étendue essentiellement rectiligne (6), de sorte que la direction d'étendue de la première région d'étendue (5) et la direction d'étendue de la deuxième région d'étendue de la gorge (3) ainsi que du flanc (7) des éléments profilés de la première région d'étendue (5) le long de la gorge (3) et de la deuxième région d'étendue (6) le long de la gorge (3) forment un angle γ mesuré sur un premier (2) des deux éléments profilés avec γ < 180°, **caractérisé en ce que**
le flanc (7) tourné vers ce premier élément profilé (2) est réalisé dans la transition entre la première (5) et la deuxième (6) région d'étendue sur toute l'étendue radiale de la base de gorge (12) jusqu'à la surface (11) limitant ce premier élément profilé (2) radialement vers l'extérieur avec un creux (9) en forme de segment de cylindre s'étendant dans l'intérieur de la gorge (3) dans la direction du flanc opposé (8), l'axe de cylindre M de la forme de segment de cylindre s'étendant essentiellement dans la direction radiale R à travers l'élément profilé (2).

2. Profil de bande de roulement selon les caractéristiques de la revendication 1,
le flanc opposé (8) étant réalisé dans le point d'inflexion dans la transition entre sa première région d'étendue (5) et sa deuxième région d'étendue (6) avec un arrondi (10) en forme de segment de cylindre réalisé vers le creux (9) en forme de segment de cylindre du premier flanc (7), dont l'axe de cylindre M de la forme de segment de cylindre s'étend essentiellement dans la direction radiale R à travers le premier élément profilé (2).

3. Profil de bande de roulement selon les caractéristiques de la revendication 1 ou 2,
la gorge (3) formant dans son étendue à chaque fois un angle d'inclinaison δ par rapport à la direction périphérique U, l'angle d'inclinaison δ dans la première région d'étendue (5) de la gorge (3) étant inférieur à l'angle d'inclinaison dans la deuxième région d'étendue (6) de la gorge (3).

4. Profil de bande de roulement selon les caractéristiques de la revendication 3,
dans lequel l'angle d'inclinaison δ dans la première région d'étendue (5) est réalisé de telle sorte que 35° ≤ δ ≤ 55°.

5. Profil de bande de roulement selon les caractéristiques d'une ou plusieurs des revendications précédentes,
la gorge (3) débouchant avec sa première région d'étendue (5) dans une gorge périphérique (4) limitant l'élément profilé (2) dans la direction axiale A.

6. Profil de bande de roulement selon les caractéristiques de la revendication 5,
la gorge (3) et les éléments profilés (2) qu'elle limite dans la direction périphérique U faisant partie d'une rangée de blocs profilés d'épaule (1) du profil de bande de roulement.

7. Profil de bande de roulement selon les caractéristiques d'une ou plusieurs des revendications précédentes,
le flanc (7) tourné vers le premier élément profilé (2) coupant la surface (11) limitant le premier élément profilé (2) dans la direction radiale R dans la première région d'étendue (5) au niveau d'une ligne de coupe F₁ et dans la deuxième région d'étendue (6) au niveau d'une ligne de coupe F₂,
la première ligne de coupe F₁ et la deuxième ligne de coupe F₂ se coupant en un point S dans leur prolongement à l'intérieur du cylindre du creux (9) en forme de segment de cylindre, et
l'axe de cylindre M étant disposé du côté, opposé à la gorge (3), du point d'intersection S de la ligne de coupe F₁ et de la ligne de coupe F₂ dans l'élément profilé (2).

8. Profil de bande de roulement selon les caractéristiques d'une ou plusieurs des revendications précédentes,
le flanc (7) tourné vers le premier élément profilé (2) coupant la surface limitant le premier élément profilé (2) dans la direction radiale R dans la première région d'étendue (5) au niveau d'une ligne de coupe F₁ et dans la deuxième région d'étendue (6) au niveau d'une ligne de coupe F₂,
la première ligne de coupe F₁ et la deuxième ligne de coupe F₂ se coupant en un point S dans leur prolongement à l'intérieur du cylindre du creux en forme de segment de cylindre (9),
la ligne de coupe F₁ et la ligne de coupe F₂ formant l'angle γ au point d'intersection S sur leur côté tourné à l'écart de la gorge (3) et vers le premier élément profilé (2), et
l'axe de cylindre M étant disposé sur la bissectrice w de l'angle γ dans l'élément profilé (2).

9. Profil de bande de roulement selon les caractéristiques d'une ou plusieurs des revendications précédentes,
avec 110° ≤ γ ≤ 150°.

10. Profil de bande de roulement selon les caractéristiques d'une ou plusieurs des revendications précédentes,
la forme cylindrique du creux en forme de segment de cylindre (9) étant réalisée avec un diamètre de cylindre D mesuré dans la surface (11) limitant le premier élément profilé (2) radialement vers l'extérieur avec 5 mm ≤ D ≤ 10 mm.

11. Profil de bande de roulement selon les caractéristiques d'une ou plusieurs des revendications précédentes,
où dans la première (5) et la deuxième (6) région d'étendue à la suite du creux (9) en forme de segment de cylindre dans le plan de coupe perpendiculairement à la direction d'étendue de la gorge (3) dans la région d'étendue respective, le premier flanc (7) est réalisé sous forme inclinée sur la majorité de son étendue dans la direction radiale R à partir de la base de gorge (12) à chaque fois avec un angle d'inclinaison α par rapport à la direction radiale R avec 5° ≤ α ≤ 15° et le deuxième flanc (8) est réalisé sous forme inclinée sur la majorité de son étendue dans la direction radiale R à partir de la base de gorge (12) à chaque fois avec un angle d'inclinaison par rapport à la direction radiale R avec 5° ≤ β ≤ 15°.

12. Profil de bande de roulement selon les caractéristiques d'une ou plusieurs des revendications précédentes,
où, dans la première (5) et la deuxième (6) région d'étendue à la suite du creux (9) en forme de segment de cylindre dans le plan de coupe perpendiculairement à la direction d'étendue de la gorge (3) dans la région d'étendue respective, le premier flanc (7) est réalisé sur la majorité de son étendue dans la direction radiale R à partir de la base de gorge (12) à chaque fois avec un angle d'inclinaison α par rapport à la direction radiale R et le deuxième flanc (8) est réalisé sur la majorité de son étendue dans la direction radiale R à partir de la base de gorge (12) à chaque fois avec un angle d'inclinaison β par rapport à la direction radiale R avec α > β.

13. Profil de bande de roulement selon les caractéristiques d'une ou plusieurs des revendications précédentes,
le premier flanc (7) étant réalisé dans sa transition à la surface (11) limitant le premier élément profilé (2) radialement vers l'extérieur le long de son étendue à l'extérieur du creux en forme de segment de cylindre (9) dans la première (5) et/ou dans la deuxième (6) région d'étendue avec un biseau (21).
